# EUROPEAN PATENT SPECIFICATION

(11) **EP 3 042 942 B1**
(45) Date of publication and mention of the grant of the patent: **30.05.2018**
(21) Application number: 14841501.1
(22) Date of filing: 13.08.2014
(51) Int. Cl.: C09K 9/02, C09B 67/08, C09B 67/46, C09D 11/16, C09B 11/06, C09D 11/17, C09B 11/24, C09B 67/22, C09B 67/02

(54) **MICROCAPSULE COLOR MATERIAL, AND INK COMPOSITION FOR WRITING TOOLS**
MIKROKAPSELFARBMATERIAL UND TINTENZUSAMMENSETZUNG FÜR SCHREIBUTENSILIEN
MATÉRIAU DE COULEUR DE TYPE MICROCAPSULE, ET COMPOSITION D'ENCRE POUR OUTILS D'ÉCRITURE

(30) Priority: 03.09.2013 JP 2013182280; 25.10.2013 JP 2013222408
(43) Date of publication of application: 13.07.2016
(73) Proprietor: Mitsubishi Pencil Company, Limited, Tokyo 140-8537 (JP)
(72) Inventor: UEDA, Satoshi, Yokohama-shi Kanagawa 221-8550 (JP); HAYAKAWA, Takeshi, Yokohama-shi Kanagawa 221-8550 (JP); ICHIKAWA, Shuji, Yokohama-shi Kanagawa 221-8550 (JP)
(74) Representative: Vossius & Partner Patentanwälte Rechtsanwälte mbB
(86) International application number: PCT/JP2014/071362
(87) International publication number: WO 2015/033750

(56) References cited:
- EP-A1- 2 412 762
- EP-A2- 1 477 320
- WO-A1-2013/061753
- JP-A- 2005 001 369
- JP-A- 2006 188 660
- JP-A- 2008 045 062
- JP-A- 2010 132 822
- JP-A- 2012 246 431

## Description

### Technical Field

The present invention relates to a microcapsule color material and an ink composition for writing instruments, and it relates more specifically to a leuco dye, a thermally discoloring microcapsule color material making use of a developing and erasing mechanism of the above dye, and an ink composition for writing instruments containing the above microcapsule color material.

### Background Art

In ink compositions for writing instruments prepared by using a thermally discoloring color material making use of a developing and erasing mechanism of a leuco dye, a color material prepared by microcapsulating the dye described above has so far been usually used.

Known are, for example, (a) an electron donative coloring organic compound, (b) an electron-accepting compound which is a developer and (c) an alcohol compound having two aromatic rings in a molecule as a discoloring temperature controller (reaction medium) for controlling a color reaction caused by both components described above, a specific ester compound composed of a saturated or unsaturated fatty acid having a specific number of carbon atoms (refer to, for example, patent documents 1 and 2), an ester compound of hydroxycarboxylic acid with alcohol (refer to, for example, a patent document 3), specific ester compounds composed of bisphenol derivatives and saturated or unsaturated fatty acids having a specific number of carbon atoms (refer to, for example, patent documents 4 and 5), and a specific ether compound (refer to, for example, a patent document 6).

However, this kind of an erasing effect is restricted, as described in the respective patent documents 1 to 6, to the specific compounds which are the discoloring temperature controllers for controlling a color reaction, and it is exerted only in a system to which the above compounds are applied as structural components. A freedom in selection of the reaction media is still low, and the problem that a freedom in selection of the materials is small is involved therein. Accordingly, the existing situation is that an improvement in a load of manufacturing and a diversification in thermal discoloration are not yet satisfactory.

### Prior Art Documents

### Patent documents

Patent document 1: JP-A 2005-1369 (claims, examples and the like)
Patent document 2: JP-A 2006-188660 (claims, examples and the like)
Patent document 3: JP-A 2008-30320 (claims, examples and the like)
Patent document 4: JP-A 2007-332232 (claims, examples and the like)
Patent document 5: JP-A 2010-132822 (claims, examples and the like)
Patent document 6: JP-A 2008-45062 (claims, examples and the like)

### DISCLOSURE OF THE INVENTION

In light of the problems and the existing situations on the conventional technologies described above, the present invention intends to solve them, and an object thereof is to provide a microcapsule color material which is increased in a freedom of material selection in selecting a discoloring temperature controller, which is expanded in a freedom of setting in setting an amount thereof, which attempts to be reduced in a load of manufacturing and improved in a diversification in thermal discoloration and which is further raised in a utilization of a microcapsule color material, and an ink composition for writing instruments containing the above microcapsule color material.

In light of the conventional problems described above and the like, intense researches repeated by the present inventors have resulted in finding that a microcapsule color material and an ink composition for writing instruments which meet the object described above is obtained by containing at least a leuco dye, a developer and a specific discoloring temperature controller, and thus they have come to complete the present invention.

That is, the present invention resides in the following items (1) to (6).
(1) A microcapsule color material containing at least a leuco dye, a developer and a discoloring temperature controller represented by the following Formula (I): 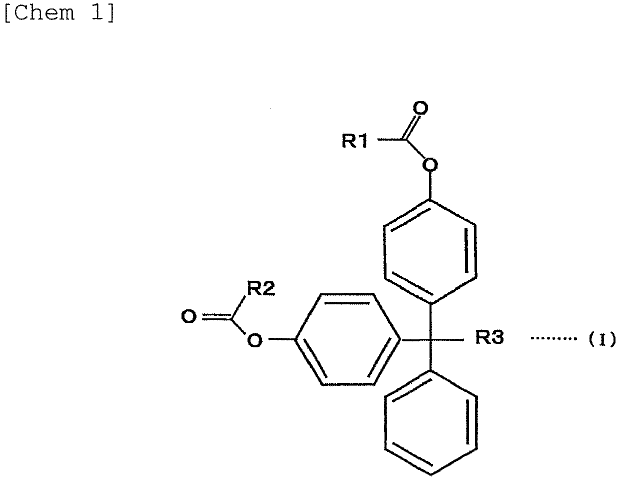 (wherein R1 and R2 represent an alkyl group having 7 to 21 carbon atoms, and R3 represents a hydrogen atom or an alkyl group having 1 to 7 carbon atoms).
(2) The microcapsule color material as described in the above item (1), wherein it has an average particle diameter falling in a range of 0.1 to 1.0 µm.
(3) The microcapsule color material as described in the above item (1) or (2), wherein the developer has a benzene ring in a skeleton.
(4) The microcapsule color material as described in the above item (3), wherein the developer is at least one selected from 1,1-bis(4-hydroxyphenyl)-2-ethylhexane, 1,1-bis(4-hydroxyphenyl)cyclohexane, 1,1-bis(4-hydroxyphenyl)-1-phenylethane and 2,2-bis(4-hydroxy-3-methylphenyl)propane.
(5) An ink composition for writing instruments prepared by using the microcapsule color material as described in any one of the above items (1) to (4).
(6) A writing instrument charged with the ink composition for writing instruments as described in the above item (5).

### Effect of the Invention

According to the present invention, provided are a microcapsule color material which is increased in a freedom of material selection in selecting a discoloring temperature controller, which is expanded in a freedom of setting in setting an amount thereof, which attempts to be reduced in a load of manufacturing and improved in a diversification in thermal discoloration and which is further raised in a utilization of a microcapsule color material, and an ink composition for writing instruments containing the above microcapsule color material.

### Embodiment for Carrying Out the Invention

The embodiment of the present invention shall be explained below in detail.

The microcapsule color material of the present invention is characterized by containing at least a leuco dye, a developer and a discoloring temperature controller represented by the following Formula (I): 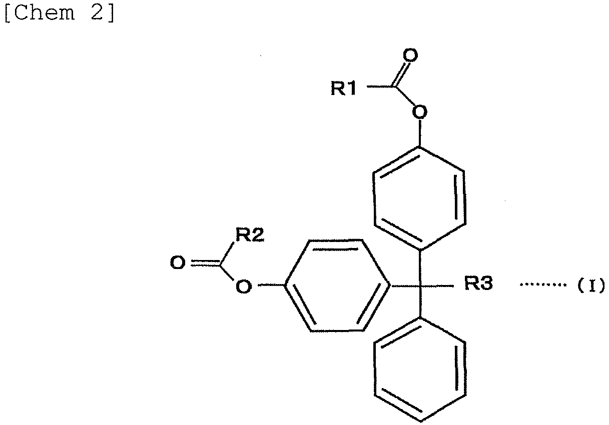 (wherein R1 and R2 represent an alkyl group having 7 to 21 carbon atoms, and R3 represents a hydrogen atom or an alkyl group having 1 to 7 carbon atoms).

### <Leuco dye >

The leuco dye which can be used shall not specifically be restricted as long as it is an electron donative dye and functions as a color former. To be specific, conventionally known compounds of a triphenylmethane base, a spiropyran base, a fluoran base, a diphenylmethane base, a rhodamine lactam base, an indolyl phthalide base, a leuco auramine base, and the like can be used alone (single kind) or in a mixture of two or more kinds thereof (hereinafter referred to merely as "at least one") from the viewpoint of obtaining inks having excellent color developing characteristics.

The leuco dye includes, to be specific, 6-(dimethylamino)-3,3-bis [4-(dimethylamino)phenyl]-1(3H)-isobenzofrunone, 3,3-bis[p-dimethylaminophenyl]-6-dimethylaminophthalide, 3-(4-diethylaminophenyl)-3-(1-ethyl-2-methylindole-3-yl) phthalide, 3-(4-diethylamino-2-ethoxyphenyl)-3-(1-ethyl-2-methylindole-3-yl)-4-azaphthalide, 1,3-dimethyl-6-diethylaminofluoran, 2-chloro-3-methyl-6-dimethylaminofluoran, 3-dibutylamino-6-methyl-7-anilinofluoran, 3-diethylamino-6-methyl-7-anilinofluoran, 3-diethylamino-6-methyl-7-xylidinofluoran, 2-(2-chloroanilino)-6-dibutylaminofluoran, 3,6-dimethoxyfluoran, 3,6-di-n-butoxyfluoran, 1,2-benz-6-diethylaminofluoran, 1,2-benz-6-dibutylaminofluoran, 1,2-benz-6-ethylisoamylaminofluoran, 2-methyl-6-(N-p-tolyl-N-ehtylamino)fluoran, 2-(N-phenyl-N-mehtylamino)-6-(N-p-tolyl-N-ehtylamino)fluoran, 2-(3'-trifluoromehtylanilino)-6-diehtylaminofluoran, 3-chloro-6-cyclohexylaminofluoran, 2-methyl-6-cyclohexylaminofluoran, 3-di(n-butyl)amino-6-methoxy-7-anilinofluoran, 3,6-bis(diphenylamino)fluoran, 3-methoxy-4-dodecoxystyrinoquinoline, and the like, and at least one of them can be used.

Further, pyridine base compounds, quinazoline base compounds, bisquinazoline base compounds and the like which develop a yellow color to a red color can be used as well.

The above leuco dyes have a lactone skeleton, a pyridine skeleton, a quinazoline skeleton and a bisquinazoline skeleton, and the colors are developed by opening these skeletons (rings).

### <Developer>

The developer used in the present invention is a component having an ability to allow the leuco dyes described above to develop colors. Compounds which have so far been publicly known can be used as the developer and include, for example, inorganic acids, aromatic carboxylic acids and anhydrides or metal salts thereof, organic sulfonic acids, other organic acids and phenolic compounds, and the like.

Among the above compounds, the developers having a benzene ring in a skeleton are preferred in relation with a solubility thereof with the compound represented by Formula (I) described above, and the compounds of a triphenylmethane base and compounds represented by the following Chem 3 to Chem 6 are more preferred.

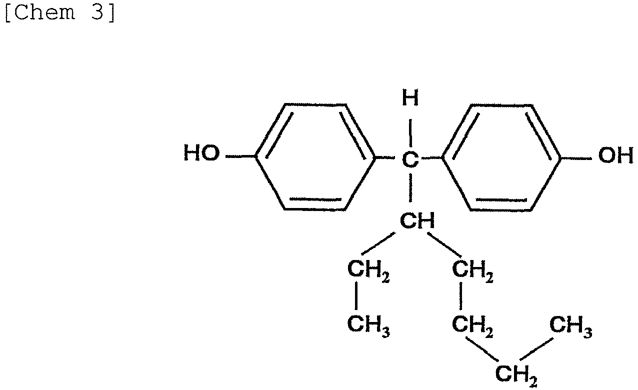

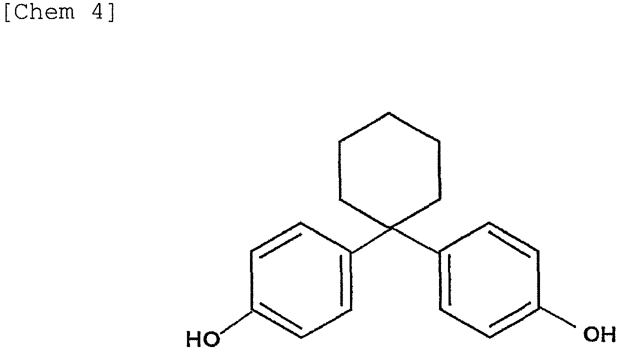

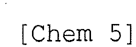

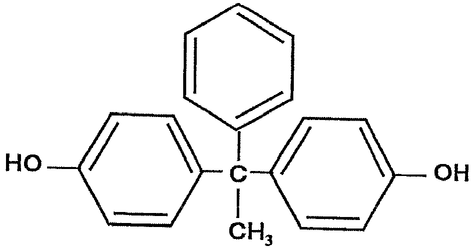

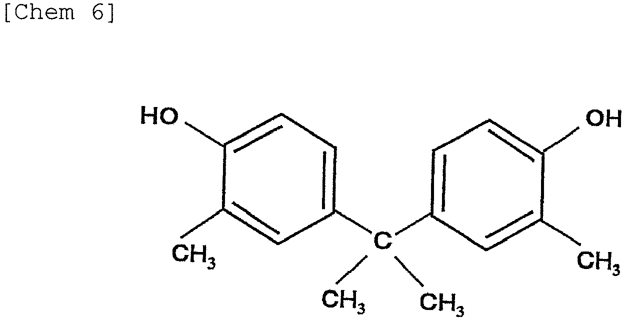

The compounds of a triphenylmethane base include, to be specific, bis(4-hydroxyphenyl)phenylmethane, bis(4-hydroxyphenyl)phenylmethane, bis(4-hydroxyphenyl)diphenylmethane, bis(3-fluoro-4-hydroxyphenyl)phenylmethane, bis(3-fluoro-4-hydroxyphenyl)diphenylmethane, bis(3,5-difluoro-4-hydroxyphenyl)phenylmethane, bis(3,5-difluoro-4-hydroxyphenyl)diphenylmethane, bis(3-methyl-4-hydroxyphenyl)-1-phenylmethane, 1,1-bis(3-tert-butyl-4-hydroxyphenyl)-1-phenylethane, 1,1-bis(3,5-di-tert-butyl-4-hydroxyphenyl)-1-phenylethane, 1,1-bis(3-phenyl-4-hydroxyphenyl)-1-phenylethane, and the like.

Also, in the compounds represented by Chem 3 to Chem 6, the compound represented by Chem 3 is 1,1-bis(4-hydroxyphenyl)-2-ethylhexane; the compound represented by Chem 4 is 1,1-bis(4-hydroxyphenyl)cyclohexane; the compound represented by Chem 5 is 1,1-bis(4-hydroxyphenyl)-1-phenylethane; and the compound represented by Chem 6 is 2,2-bis(4-hydroxy-3-methylphenyl)propane.

In the present invention, the above developers are used alone or in combination of two or more kinds thereof, or developers which have so far been publicly known are used in combination as far as the various characteristics of the developers of the present invention are not damaged, whereby the color density in developing can freely be controlled. Accordingly, a use amount thereof can optionally be selected according the desired color density and shall not specifically be restricted. Usually, it is selected suitably in a range of 0.1 to 100 parts by mass based on 1 part by mass of the leuco dye described above.

### <Discoloring temperature controller>

The discoloring temperature controller used in the present invention is a substance for controlling a discoloring temperature in coloration of the leuco dye and the developer each described above.

The discoloring temperature controller which can be used in the present invention is represented by the following Formula (I): 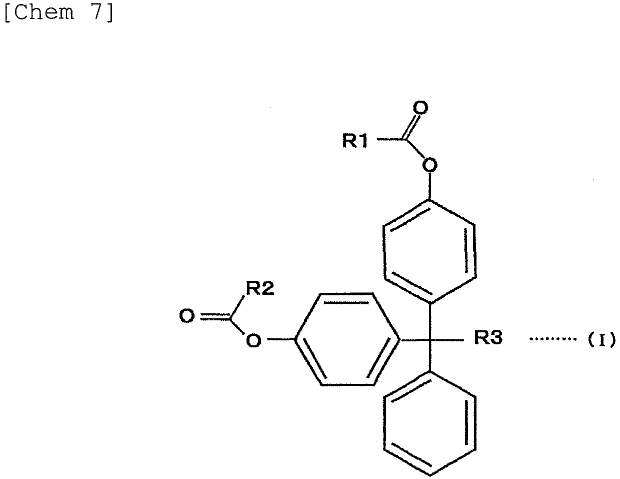 (wherein R1 and R2 represent an alkyl group having 7 to 21 carbon atoms, and R3 represents a hydrogen atom or an alkyl group having 1 to 7 carbon atoms).

R1 and R2 in Formula (I) described above each represent independently an alkyl group having 7 to 21 carbon atoms and may be the same or different. They shall not specifically be restricted as long as they are a linear or branched alkyl group having 7 to 21 carbon atoms and include, for example, a n-heptyl group, a n-nonyl group, a n-undecyl group, a n-dodecyl group, a n-tridecyl group, a n-pentadecyl group, a n-heptadecyl group, a n-heneicosyl group, an isoheptyl group, an isoundecyl group, an isoheptadecyl group, and the like.

Also, R3 in Formula (I) described above represents a hydrogen atom or a linear or branched alkyl group having 1 to 7 carbon atoms and includes, for example, a methyl group, an ethyl group, a propyl group, a butyl group, an isobutyl group, a hexyl group, and the like.

A production method for the usable compound represented by Formula (I) described above is already known, and the compound includes, to be specific, at least one of bis(4-hydroxyphenyl)phenylmethane dicaprylate (C₇H₁₅), bis(4-hydroxyphenyl)phenylmethane dilaurate (C₁₁H₂₃), bis(4-hydroxyphenyl)phenylmethane dimyristate (C₁₃H₂₇), bis(4-hydroxyphenyl)phenylethane dimyristate (C₁₃H₂₇), bis(4-hydroxyphenyl)phenylmethane dipalmitate (C₁₅H₃₀), bis(4-hydroxyphenyl)phenylmethane dibehenate (C₂₁H₄₃), bis(4-hydroxyphenyl)phenylethylhexylidene dimyristate (C₁₃H₂₇), and the like.

A use amount of the above discoloring temperature controller can optionally be selected according the desired hysteresis width and the desired color density in color development and shall not specifically be restricted. Usually, it is used preferably in a range of 1 to 1000 parts by mass based on 1 part by mass of the leuco dye.

Discoloring temperature controllers which have so far been publicly known in this kind of a thermosensitive discoloring composition can be used as well in combination as far as the various characteristics of the ink composition for writing instruments according to the present invention are not damaged.

### <Microcapsule color material>

The microcapsule color material of the present invention can be produced by microcapsulating the thermally discoloring composition comprising at least the leuco dye, the developer and the discoloring temperature controller so that an average particle diameter thereof is controlled preferably to 0.1 to 1.0 µm.

The microcapsulating method includes, for example, an interfacial polymerization method, an interfacial polycondensation method, an in situ polymerization method, an in-liquid curing coating method, a phase separation method from an aqueous solution, a phase separation method from an organic solvent, a melt dispersing cooling method, an air suspending coating method, a spray drying method, and the like, and it can suitably be selected according to the uses.

In a case of, for example, the phase separation method from an aqueous solution, the leuco dye, the developer and the discoloring temperature controller are molten by heating, and then the mixture is added to an emulsion and dispersed in a form of an oil droplet by heating and stirring; then, a resin raw material or the like is used as a capsule filming agent; the respective solutions such as, for example, amino resin solutions, to be specific, a methylolmelamine aqueous solution, a urea solution, a benzoguanamine solution and the like are slowly added and subsequently reacted to prepare a dispersion; and the above dispersion is filtrated, whereby the intended thermally discoloring microcapsule pigment can be produced.

The contents of the leuco dye, the developer and the discoloring temperature controller each described above are varied according to the kinds of the leuco dye, the developer and the discoloring temperature controller, and the microcapsulating method, and they are 0.1 to 100 in a case of the developer and 1 to 100 in a case of the discoloring temperature controller in terms of a mass ratio based on 1 of the above dye. A content of the capsule filming agent is 0.1 to 1 in terms of a mass ratio based on the ingredients of the capsule.

In the microcapsule color material of the present invention, a developing temperature and an erasing temperature of the respective colors can be set to suitable temperatures by suitably combining the kinds and the amounts of the leuco dye, the developer and the discoloring temperature controller.

In the microcapsule color material of the present invention, a wall membrane is formed preferably by a urethane resin, an epoxy resin or an amino resin from the viewpoints of further enhancing the drawn line density, the storage stability and the writing property. The urethane resin includes, for example, compounds of isocyanates and polyols. The epoxy resin includes, for example, compounds of epoxy resins and amines. The amino resin is formed preferably by, for example, a melamine resin, a urea resin, a benzoguanamine resin and the like and more preferably by the melamine resin from the viewpoints of the productivity, the storage stability and the writing property.

A thickness of the wall membrane of the microcapsule color material is suitably determined according to a required strength of the wall membrane and the required drawn line density.

In forming the wall membrane by the amino resin, the suitable amino resin raw material (the melamine resin, the urea resin, the benzoguanamine resin or the like), a dispersant, a protective colloid and the like are selected when using the respective microcapsulating methods.

An average particle diameter of the microcapsule color material of the present invention is preferably 0.1 to 1.0 µm, more preferably 0.3 to 1.0 µm from the viewpoints of the coloring property, the color developing property, the erasability and the stability, and inhibiting adverse influences from being exerted to the writing property. The "average particle diameter" prescribed in the present invention (including examples and the like) is a value of an average particle diameter measured by means of a particle size distribution measuring equipment (a particle diameter measuring equipment N4 Plus, manufactured by Beckman Coulter Inc.).

If the above average particle diameter is less than 0.1 µm, the sufficiently high drawn line density is not obtained. On the other hand, if it exceeds 1.0 µm, the writing property is deteriorated, and the microcapsule color material is reduced in a dispersion stability. Accordingly, both are not preferred.

The microcapsule color material in which an average particle diameter falla in the range (0.1 to 1.0 pm) described above can be prepared by suitably combining the stirring conditions, though varied according to the microcapsulating methods, in producing the microcapsule color material in a case of the phase separation method from an aqueous solution.

The microcapsule color material of the present invention thus constituted is increased in a freedom of material selection in selecting a discoloring temperature controller and expanded in a freedom of setting in setting an amount thereof in the microcapsule color material prepared by using the leuco dye, and it attempts to be reduced in a load of manufacturing and improved in a diversification in thermal discoloration and can be further raised in a utilization of a microcapsule color material. In addition thereto, it is excellent, as is the case with conventional thermally discoloring color materials, in a color optical density, an erasability and a recoloring property, and it can suitably be used as the thermally discoloring color material for writing instruments. As described later, when it is used as the color material of the ink composition for writing instruments regardless of using a water-based solvent or an oil-based solvent, the effects described above can be exerted without being affected by the kind of the solvent.

### <Ink composition for writing instruments>

The ink composition for writing instruments according to the present invention is characterized by comprising the microcapsule color material constituted in the manner described above, and it can be used as an ink composition for writing instruments such as water-based or oil-based ballpoint pens, marking pens and the like.

A content of the microcapsule color material of the present invention is preferably 5 to 30 % by mass (hereinafter referred to merely as %), more preferably 10 to 25 % based on a whole amount of the ink composition.

If the above content of the microcapsule color material is less than 5 %, the tinting strength and the color developing property are unsatisfactory. On the other hand, if it exceeds 30 %, blurring is liable to be brought about. Accordingly, both are not preferred.

### <Water-based ink composition for writing instruments>

In the ink composition for writing instruments according to the present invention, water (city water, refined water, distilled water, ion-exchanged water, purified water, and the like) which is a solvent is contained therein as the balance as well as the microcapsule color material described above in a case of the water-based ink composition, and in addition thereto, a water-soluble organic solvent, a thickener, a lubricant, a rust preventive, a preservative or a fungicide, and the like can suitably be contained therein according to uses for the respective writing instruments (ballpoint pens, marking pens and the like) as long as the effects of the present invention are not damaged.

Capable of being used alone or in a mixture as the water-soluble organic solvent which can be used are, for example, glycols such as ethylene glycol, diethylene glycol, triethylene glycol, propylene glycol, polyethylene glycol, 3-butylene glycol, thiodiethylene glycol, glycerin, and the like, ethylene glycol monomethyl ether and diethylene glycol monomethyl ether.

The thickener which can be used is preferably at least one selected from the group consisting of, for example, synthetic polymers, celluloses and polysaccharides. It includes, to be specific, gum arabic, tragacanth gum, guar gum, locust bean gum, alginic acid, carrageenan, gelatin, xanthan gum, welan gum, succinoglycan, diutan gum, dextran, methyl cellulose, ethyl cellulose, hydroxyethyl cellulose, carboxymethyl cellulose, starch glycolic acid and salts thereof, propylene glycol alginate, polyvinyl alcohol, polyvinylpyrrolidone, polyvinyl methyl ether, polyacrylic acid and salts thereof, carboxyvinyl polymers, polyethylene oxide, copolymers of vinyl acetate and polyvinylpyrrolidone, crosslinking type acrylic acid polymers and salts thereof, non-cross-linking type acrylic acid polymers and salts thereof, styrene acrylic acid copolymers and salts thereof, and the like.

The lubricant includes nonionic lubricants such as fatty acid esters of polyhydric alcohols which are used as well for surface treating agents of pigments, higher fatty acid esters of sugar, polyoxyalkylene higher fatty acid esters, alkylphosphoric acid esters, and the like, anionic lubricants such as alkylphosphates of higher fatty acid amides, alkylallylsulfonates, and the like, derivatives of polyalkylene glycols, fluorine base surfactants, polyether-modified silicones, and the like. The rust preventive includes benzotriazole, tolyltriazole, dicyclohexylammonium nitrite, suponins, and the like. The preservative or the fungicide includes phenol, sodium omadine, sodium benzoate, benzimodazole base compounds, and the like.

The above ink composition for writing instruments can be produced by using methods which have so far been known, and it is obtained, for example, by blending the prescribed amounts of the respective components used in the water-based ink composition described above in addition to the microcapsule color material and stirring and mixing them by means of a stirring device such as a homomixer, a disper and the like. Further, coarse particles contained in the ink composition may be removed, if necessary, by filtering and centrifugal separation.

### <Oil-based ink composition for writing instruments>

The ink composition for writing instruments according to the present invention contains the microcapsule color material constituted in the manner described above in a case of the oil-based ink composition, and it contains preferably at least one selected from polypropylene glycol, polybutylene glycol and polyoxypropylene diglyceryl ether as a principal solvent. The above solvents which are selected and used as the principal solvent act so that the microcapsule color material described above is prevented from being aggregated with the passage of time.

Polypropylene glycol and polybutylene glycol each having various polymerization degrees can be used. From the viewpoint of further exerting the effects of the present invention, polypropylene glycol having a polymerization degree (weight average) falling in a range of 400 to 700 is preferably used, and polybutylene glycol having a polymerization degree (weight average) falling in a range of 500 to 700 is preferably used.

Polyoxypropylene diglyceryl ether [POP (n) diglyceryl ether] used in the present invention is obtained by subjecting oxypropylene to addition polymerization with a hydroxyl group of diglycerin. In the present invention, an addition mole number (n) of oxypropylene in polyoxypropylene diglyceryl ether [POP (n) diglyceryl ether] is preferably 4 to 25, more preferably 4 to 14 from the viewpoint of further exerting the effects of the present invention.

A content of the above principal solvents is preferably 50 to 100 %, more preferably 80 to 100 % based on a whole amount of the solvents contained in the ink composition. Controlling a content of the above principal solvents to 50 % or more makes it possible to inhibit the microcapsule color material to the utmost from being aggregated with the passage of time. In addition to the principal solvents described above, solvents, for example, glycerin, diglycerin, propylene glycol, and the like each having a property of being compatible with the principal solvents can suitably be added as long as the effects of the present invention are not damaged.

The above oil-based ink composition for writing instruments can contain, in addition to the microcapsule color material and the principal solvent each described above, a resin, a dispersant, a rust preventive, a preservative, a lubricant, and the like which can be compatible with the oil-based ink without exerting adverse effects thereon according to uses for the respective writing instruments (ballpoint pens, marking pens and the like), or if necessary.

The resin which can be used includes, for example, resins represented by ketone resins, styrene resins, styrene-acryl resins, terpene phenol resins, rosin-modified maleic acid resins, rosin phenol resins, alkylphenol resins, phenol base resins, styrene maleic acid resins, rosin base resins, acryl base resins, urea aldehyde base resins, maleic acid base resins, cyclohexanone base resins, polyvinyl butyral, polyvinylpyrrolidone, and the like.

The resins which can disperse the microcapsule color material are selected from the resins listed above and can be used as the usable dispersant. Surfactants and oligomers which meet the object can be used as well.

Capable of being listed as the specific dispersant are, for example, synthetic resins such as polyvinyl alcohol, polyvinylpyrrolidone, polyvinyl butyral, polyvinyl ether, styrene-maleic acid copolymers, ketone resins, hydroxyethyl cellulose and derivatives thereof, styrene-acrylic acid copolymers, and the like, PO•EO adducts, amine base oligomers of polyesters, and the like.

Also, various kinds of the rust preventives, the preservatives and the lubricants each used in the water-based ink composition described above can be used as the rust preventive, the preservative and the lubricant.

The above ink composition for writing instruments can be produced by using methods which have so far been known, and it is obtained, for example, by blending the prescribed amounts of the respective components used in the oil-based ink composition described above in addition to the microcapsule color material and stirring and mixing them by means of a stirring device such as a homomixer, a disper and the like. Further, coarse particles contained in the ink composition may be removed, if necessary, by filtering and centrifugal separation.

The ink composition for writing instruments according to the present invention which is constituted in the manner described above is charged in marking pens equipped with a fiber tip, a felt tip or a plastic tip at a writing end part, and ballpoint pens equipped with a ballpoint pen tip at a writing end part, and they are used.

In the ink composition for writing instruments and the writing instruments according to the present invention, prepared is a water-based or oil-based ink comprising the microcapsule color material containing at least the leuco dye, the developer and the discoloring temperature controller represented by Formula (I), and obtained are the ink composition for writing instruments which does not cause aggregation and discoloration with the passage of time in the microcapsule color material and can discolor well handwritings when a writing instrument such as a ballpoint pen, a marking pen and the like loaded with the above ink is used for writing on a paper and the like and which is excellent in an erasability and a recoloring property, and the writing instruments containing the above ink.

### EXAMPLES

Next, the present invention shall be explained in further details with reference to examples and comparative examples, but the present invention shall not be restricted to the following examples. Hereinafter, "part" which is a blend unit means part by mass.

### Preparation of microcapsule color materials: A-1 to A-12, following Table 1:

### Microcapsule color material: A-1:

A color material was obtained in the combination of a leuco dye, a developer and a discoloring temperature controller of the respective amounts shown in the following Table 1.

To be specific, 1 part of methyl-3',6'-bisdiphenylaminofluoran as the leuco dye, 2 parts of 1,1-bis(4-hydroxyphenyl)cyclohexane as the developer and 24 parts of bis(4-hydroxyphenyl)phenylmethane dicaprylate as the discoloring temperature controller were molten by heating at 100°C to obtain 27 parts of a homogeneous composition.

An even hot solution of the composition 27 parts obtained above was slowly added to 100 parts of an aqueous solution of 90°C prepared as a protective colloid by dissolving 40 parts of a methyl vinyl ether•maleic anhydride copolymer resin (Gantlet AN-179: manufactured by ISP Inc.) in water at pH 4 with NaOH, and the mixture was heated while stirring and dispersed in an oil droplet form having a diameter of about 0.5 to 1.0 µm. Then, a melamine resin (Sumilex Resin M-3, manufactured by Sumitomo Chemical Co., Ltd.) 20 parts as a capsule coating agent was slowly added thereto, and the mixture was heated at 90°C for 30 minutes and microcapsulated to obtain a microcapsule dispersion of a reversible thermosensitive discoloring hysteresis composition in which a coating film comprises the melamine resin. The above dispersion was cooled down to a room temperature and then subjected to addition of acid, filtration and washing with water, and it was dried by means of a spray dryer to thereby obtain a microcapsule color material of a powder form having an average particle diameter of 0.55 *µ*m. A hue thereof assumed a dense blue color in a developing state.

### Microcapsule color materials: A-2 to A-12:

The respective microcapsule color materials of a powder form were obtained in the same procedure as in A-1 described above, except that the leuco dyes, the developers and the discoloring temperature controllers of the respective amounts shown in the following Table 1 were combined.

The average particle diameters and the hues (developing state) of the microcapsule color materials A-2 to A-12 thus obtained are shown in the following Table 1.

**Table 1**

| (Microcapsule color material) | | | | | | | | | | | | | |
|---|---|---|---|---|---|---|---|---|---|---|---|---|---|
| | | A-1 | A-2 | A-3 | A-4 | A-5 | A-6 | A-7 | A-8 | A-9 | A-10 | A-11 | A-12 |
| Leuco dye | Methyl-3',6'-bisdiphenylaminofluoran | 1 | | | 1 | | | 1 | | | | | |
| | Chloro-3',6'-bisdiphenylaminofluoran | | 1 | | | 1 | | | 1 | | | 1 | |
| | 3,4-Dichloro-3',6'-bisdiphenylaminofluoran | | | 1 | | | 1 | | | 1 | 1 | | 1 |
| Developer | Bis(4-hydroxyphenyl)phenylmethane | | 2 | 2 | 2 | | | | | 2 | 2 | | |
| | 1,1-Bis(4-hydroxyphenyl)-1-phenylethane | | | | | 2 | 2 | | | | | | |
| | 1,1-Bis(4-hydroxyphenyl)cyclohexane | 2 | | | | | | 2 | 2 | | | | |
| | 1,1-Bis(4-hydroxyphenyl)-2-ethylhexane | | | | | | | | | | | 2 | |
| | 2,2-Bis(4-hydroxy-3-methylphenyl) propane | | | | | | | | | | | | 2 |
| Discoloring temperature controller | Bis(4-hydroxyphenyl)phenylmethane dicaprylate | 24 | | | | | | | | | | | |
| | Bis(4-hydroxyphenyl)phenylmethane dilaurate | | 24 | | | | | | 24 | | | 24 | |
| | Bis(4-hydroxyphenyl)phenylmethane dimyristate | | | 24 | | | 24 | | | | | | 24 |
| | Bis(4-hydroxyphenyl)phenylmethane dipalmitate | | | | 24 | | | 24 | | | | | |
| | Bis(4-hydroxyphenyl)phenylmethane dibehenate | | | | | 24 | | | | | | | |
| | Bis(4-hydroxyphenyl)phenylethane dimyristate | | | | | | | | | 24 | | | |
| | Bis(4-hydroxyphenyl)-phenylethylhexylidene dimyristate | | | | | | | | | | 24 | | |
| Average particle diameter (g m) | | 0.55 | 0.62 | 0.72 | 0.51 | 0.69 | 0.8 | 0.57 | 0.61 | 0.74 | 0.77 | 0.68 | 0.69 |
| Hue (developing state) | | Blue | Blue | Blue | Blue | Blue | Blue | Blue | Blue | Blue | Blue | Blue | Blue |

### Prescription of inks:

The microcapsule color materials A-1 to A-12 obtained in the production examples described above were used to prepare the respective water-based ink compositions for water-based ballpoint pens by an ordinary method according to blend compositions shown in the following Table 2.

### Preparation of water-based ballpoint pens:

The respective ink compositions obtained above were used to prepare water-based ballpoint pens. To be specific, a holder of a ballpoint pen (trade name: Signo UF-202, manufactured by Mitsubishi Pencil Co., Ltd.) was used, and the respective water-based and oil-based inks described above were filled in a refill comprising a polypropylene-made ink reservoir having an inner diameter of 3.8 mm and a length of 90 mm, a stainless-made tip (cemented carbide ball, ball diameter: 0.5 mm) and a joint for connecting the above reservoir and the above tip. An ink follower comprising a mineral oil as a principal component was arranged at a rear end of the ink to prepare water-based ballpoint pens.

The respective ballpoint pens prepared in Examples 1 to 12 were used to evaluate an erasability and a recoloring property by the following evaluating methods. The results thereof are shown in the following Table 2.

### Evaluating method of erasability:

The pen described above was used to write a circle having a diameter of about 3 cm on a PPC paper, and then the paper was stored at 65°C for 3 minutes, followed by evaluating it according to the following evaluation criteria.

### Evaluation criteria:

○: color was completely erased
Δ: color was slightly observed to remain unerased
×: color was clearly observed to remain unerased

### Evaluating method of recoloring property:

The paper on which the color was erased in the evaluation of the erasability described above was stored at -20°c for 20 minutes, and then it was evaluated according to the following evaluation criteria.

### Evaluation criteria:

○:color was recovered up to the original density
Δ: color was recovered but a little reduced in a density
×: color was recovered but reduced in a density to a large extent, or was not recovered

**Table 2**

| (whole amount: 100 % by mass) | | | | | | | | | | | | | |
|---|---|---|---|---|---|---|---|---|---|---|---|---|---|
| | | Example | | | | | | | | | | | |
| | | 1 | 2 | 3 | 4 | 5 | 6 | 7 | 8 | 9 | 10 | 11 | 12 |
| Microcapsule color material | A-1 | 15 | | | | | | | | | | | |
| | A-2 | | 15 | | | | | | | | | | |
| | A-3 | | | 15 | | | | | | | | | |
| | A-4 | | | | 15 | | | | | | | | |
| | A-5 | | | | | 15 | | | | | | | |
| | A-6 | | | | | | 15 | | | | | | |
| | A-7 | | | | | | | 15 | | | | | |
| | A-8 | | | | | | | | 15 | | | | |
| | A-9 | | | | | | | | | 15 | | | |
| | A-10 | | | | | | | | | | 15 | | |
| | A-11 | | | | | | | | | | | 15 | |
| | A-12 | | | | | | | | | | | | 15 |
| Amines | Triethanolamine | 0.1 | 0.1 | 0.1 | 0.1 | 0.1 | 0.1 | 0.1 | 0.1 | 0.1 | 0.1 | 0.1 | 0.1 |
| Thickener | Xanthane gum * 1 | 0.3 | 0.3 | 0.3 | 0.3 | 0.3 | 0.3 | 0.3 | 0.3 | 0.3 | 0.3 | 0.3 | 0.3 |
| Rust preventive | Benzotriazole | 0.3 | 0.3 | 0.3 | 0.3 | 0.3 | 0.3 | 0.3 | 0.3 | 0.3 | 0.3 | 0.3 | 0.3 |
| Antiseptic agent | Benzoisothiazoline and others *2 | 0.3 | 0.3 | 0.3 | 0.3 | 0.3 | 0.3 | 0.3 | 0.3 | 0.3 | 0.3 | 0.3 | 0.3 |
| Lubricant | Phosphoric ester *3 | 0.3 | 0.3 | 0.3 | 0.3 | 0.3 | 0.3 | 0.3 | 0.3 | 0.3 | 0.3 | 0.3 | 0.3 |
| Solvent | Glycerin | 10 | 10 | 10 | 10 | 10 | 10 | 10 | 10 | 10 | 10 | 10 | 10 |
| Water | Refined water | 73.7 | 73.7 | 73.7 | 73.7 | 73.7 | 73.7 | 73.7 | 73.7 | 73.7 | 73.7 | 73.7 | 73.7 |
| Evaluation | Erasability | ○ | ○ | ○ | ○ | ○ | ○ | ○ | ○ | ○ | ○ | ○ | ○ |
| | Recoloring property | ○ | ○ | ○ | ○ | ○ | ○ | ○ | ○ | ○ | ○ | ○ | ○ |

| | | | | | | | | | | | | | |
|---|---|---|---|---|---|---|---|---|---|---|---|---|---|
| *1: KELZAN S (manufactured by Sansho Co., Ltd.) *2: Bioden 421 (manufactured by Daiwa Chemical Industries Co., Ltd.) *3: RD-510Y (manufactured by Toho Chemical Industry Co., Ltd.) | | | | | | | | | | | | | |

As apparent from the results shown in Table 1 and Table 2 each described above, it has become clear that the ink compositions for writing instruments prepared in Examples 1 to 12 falling in the scope of the present invention are provided with an erasability and a recoloring property which are satisfactory and sufficiently high. This has allowed to confirm that the microcapsule color materials prepared by using the leuco dyes are increased in a freedom of material selection in selecting a discoloring temperature controller and expanded in a freedom of setting in setting an amount thereof and that they attempt to be reduced in a load of manufacturing and improved in a diversification in thermal discoloration and can be further raised in a utilization of a microcapsule color material.

### INDUSTRIAL APPLICABILITY

Obtained are the microcapsule color material suited to writing instruments such as ballpoint pens, marking pens and the like, and the ink composition for writing instruments.

## Claims

1. A microcapsule color material containing at least a leuco dye, a developer and a discoloring temperature controller represented by the following Formula (I): 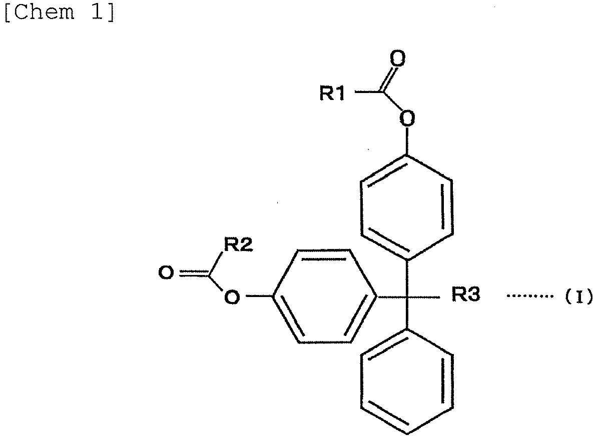 wherein R1 and R2 represent an alkyl group having 7 to 21 carbon atoms, and R3 represents a hydrogen atom or an alkyl group having 1 to 7 carbon atoms.

2. The microcapsule color material as described in claim 1, wherein it has an average particle diameter falling in a range of 0.1 to 1.0 *µ*m.

3. The microcapsule color material as described in claim 1 or 2, wherein the developer has a benzene ring in a skeleton.

4. The microcapsule color material as described in claim 3, wherein the developer is at least one selected from 1,1-bis(4-hydroxyphenyl)-2-ethylhexane, 1,1-bis(4-hydroxyphenyl)cyclohexane, 1,1-bis(4-hydroxyphenyl)-1-phenylethane and 2,2-bis(4-hydroxy-3-methylphenyl)propane.

5. An ink composition for writing instruments prepared by using the microcapsule color material as described in any one of claims 1 to 4.

6. A writing instrument charged with the ink composition for writing instruments as described in claim 5.

## Patentansprüche

1. Ein Mikrokapselfarbmaterial, enthaltend mindestens einen Leukofarbstoff, einen Entwickler und einen Verfärbungstemperaturregler, dargestellt durch die nachstehende Formel (I): 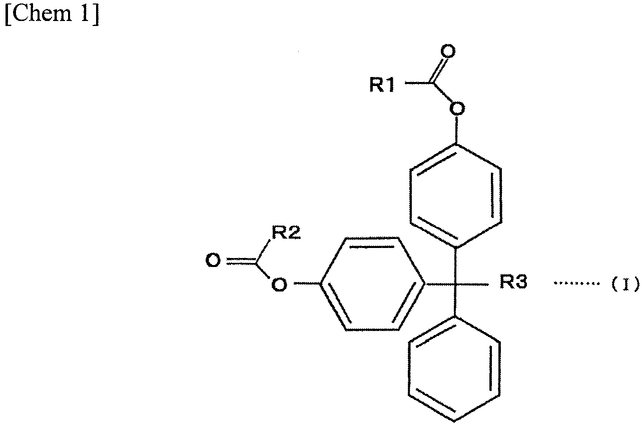 wobei R1 und R2 eine Alkylgruppe mit 7 bis 21 Kohlenstoffatomen darstellen und R3 ein Wasserstoffatom oder eine Alkylgruppe mit 1 bis 7 Kohlenstoffatomen darstellt.

2. Das Mikrokapselfarbmaterial wie in Anspruch 1 beschrieben, wobei es einen durchschnittlichen Teilchendurchmesser, der in einem Bereich von 0,1 bis 1,0 µm fällt, aufweist.

3. Das Mikrokapselfarbmaterial wie in Anspruch 1 oder 2 beschrieben, wobei der Entwickler einen Benzolring in einem Gerüst aufweist.

4. Das Mikrokapselfarbmaterial wie in Anspruch 3 beschrieben, wobei der Entwickler mindestens einer ist, ausgewählt aus 1,1-bis(4-Hydroxyphenyl)-2-ethylhexan, 1,1-bis(4-Hydroxyphenyl)cyclohexan, 1,1-bis(4-Hydroxyphenyl)-1-phenylethan und 2,2-bis(4-Hydroxy-3-methylphenyl)propan.

5. Eine Tintenzusammensetzung für Schreibgeräte, hergestellt unter Verwendung des Mikrokapselfarbmaterials wie in einem der Ansprüchen 1 bis 4 beschrieben.

6. Ein Schreibgerät, das mit der Titenzusammensetzung für Schreibgeräte wie in Anspruch 5 beschrieben befüllt ist.

## Revendications

1. Matériau colorant en microcapsules contenant au moins un leuco-colorant, un révélateur et un régulateur de température de décoloration représenté par la formule (I) suivante : 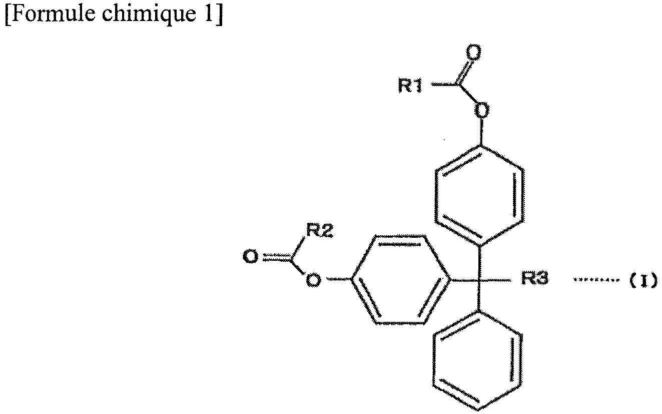 dans laquelle R1 et R2 représentent un groupe alkyle ayant 7 à 21 atomes de carbone, et R3 représente un atome d'hydrogène ou un groupe alkyle ayant 1 à 7 atomes de carbone.

2. Matériau colorant en microcapsules selon la revendication 1, lequel possède un diamètre moyen de particules situé dans la plage allant de 0,1 à 1,0 µm.

3. Matériau colorant en microcapsules selon la revendication 1 ou 2, dans lequel le révélateur a un cycle benzène dans son squelette.

4. Matériau colorant en microcapsules selon la revendication 3, dans lequel le révélateur est au moins l'un choisi parmi le 1,1-bis(4-hydroxyphényl)-2-éthylhexane, le 1,1-bis(4-hydroxyphényl)cyclohexane, le 1,1-bis(4-hydroxyphényl)-1-phényléthane et le 2,2-bis(4-hydroxy-3-méthylphényl)propane.

5. Composition d'encre pour instruments d'écriture préparée en utilisant le matériau colorant en microcapsules tel que décrit dans l'une quelconque des revendications 1 à 4.

6. Instrument d'écriture chargé avec la composition d'encre pour instruments d'écriture telle que décrite dans la revendication 5.
